# EUROPEAN PATENT APPLICATION

(11) **EP 0 892 480 A1**
(43) Date of publication of application: **20.01.1999**
(21) Application number: 97112002.7
(22) Date of filing: 15.07.1997
(51) Int. Cl.: H02H 9/02

(54) **AC/DC voltage converter**

(71) Applicant: Ascom Energy Systems AG, 3000 Bern 14 (CH)
(72) Inventor: Olsson, Erik Olof, 2534 Orvin (CH); Mbaye, Fall, 3098 Schliern (CH)
(74) Representative: Roshardt, Werner Alfred, Dipl.-Phys.

(57) **Abstract**

An AC/DC voltage converter comprises a rectifier circuit (1) and a step-up converter circuit (3), which incorporates a storage capacitor (C1) and a current limiting device. The current limiting device (RNTC) is inserted in series between the lower voltage end of the storage capacitor (C1) and the lower voltage output terminal (4.2) of the step-up converter circuit (3). This minimizes the losses in the current limiting device (RNTC) during normal operation mode.

## Description

### Technical field

The invention relates to an AC/DC voltage converter, comprising a rectifier circuit, a step-up converter circuit, a storage capacitor and a current limiting device.

### Prior Art

In conventional voltage converters a storage capacitor is connected directly to the outputs of the step-up converter circuit, while a resistor is either connected between one output of the rectifier circuit and one input of the step-up converter circuit or is connected to an input of the rectifier circuit. The resistor limits the current during start up. However, the input current flows through the resistor regardless of the state of the switch in the step-up converter. This leads to correspondingly high power loss in the current limiting resistor.

According to the patent document US 5,523,935 the power loss can be remarkably reduced, if the resistor is placed at the output of the step-up converter circuit, while rectifier circuit and step-up converter are connected directly to each other.

### Summary of the invention

It is the object of the invention to further reduce the losses in an AC/DC converter circuit.

This object is achieved by the features defined in claim 1. Accordingly, the current limiting device is inserted in series between the lower voltage end of the storage capacitor and the lower voltage output of the step-up converter.

During normal operation (i.e. after start-up), the current circulating in the current limiting device is lower than in the prior art.

According to a preferred embodiment, the current limiting device is a NTC resistor. In the start-up phase, it will exhibit a higher resistance than during the normal operation after it has been heated up. This solution is particularly advantageous for low cost implementation.

There may be a short-circuit element parallel to the current limiting device for eliminating losses in the current limiting device during normal operation of the AC/DC converter.

The short-circuit element may be a diode. However, it may also be a relay, a mosfet, an npn transistor or an IGBT device (IGBT = Integrated Gate Bipolar Transistor). The diode has the advantage of not needing any control circuit.

The following description of the preferred embodiments and the claims will point out further details and preferred features of the invention.

### Brief description of the drawings

The enclosed drawings show:
- Fig. 1: a first preferred embodiment of the invention;
- Fig. 2: a second preferred embodiment, additionally comprising a short-circuit element.

Similar elements are indicated by the same reference numerals.

### Detailed description of the preferred embodiments

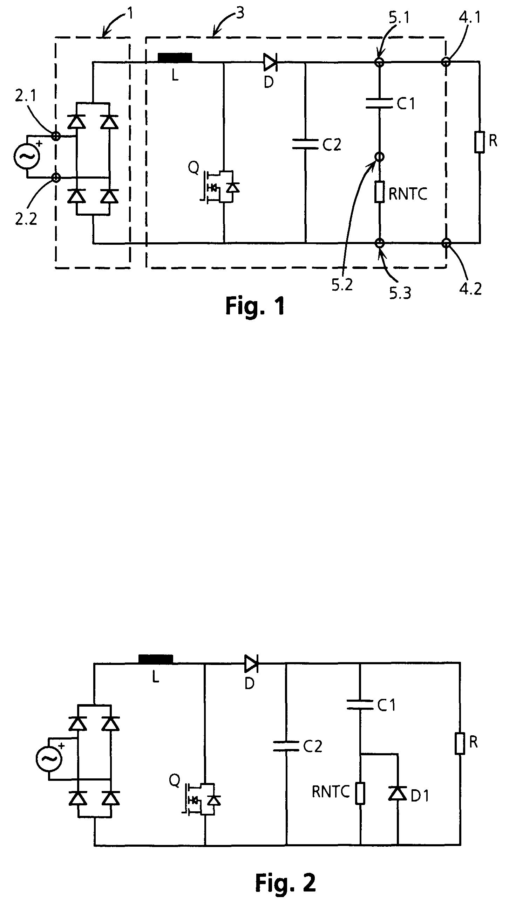

Fig. 1 shows a circuit arrangement for an AC/DC converter (boost converter) according to the invention. AC current is fed via input terminals 2.1, 2.2 to a rectifier circuit 1. This rectifier circuit 1 may be a conventional rectifier bridge comprising four diodes.

The rectifier circuit 1 is immediately followed by a step-up converter 3, which may be of a conventional type. As shown in Fig. 1, the step-up converter 3 may consist of an inductor L, a high frequency switch Q (e.g. a mosfet switch), a diode D and a storage capacitor C1. The output terminals 4.1, 4.2 provide the higher and the lower voltage respectively of the boost converter.

The positive voltage terminal of the storage capacitor C1 is directly connected to the output of the diode D. There is no current limiting device in the path between the input terminal 2.1 and said capacitor C1. This is an important difference to the prior art circuit disclosed in US 5,523,935.

The higher voltage output terminal 4.1 is connected to node 5.1 which is defined between the diode D and the higher voltage terminal of the storage capacitor C1. The negative voltage terminal of the storage capacitor C1 (indicated by node 5.2) is followed by the inrush current limiting resistor RNTC. This resistor RNTC therefore is inserted between the negative voltage terminal of the storage capacitor C1 and the lower voltage output terminal 4.2. The inrush current obviously flows from the diode D through node 5.1 to storage capacitor C1, from there through node 5.2 to resistor RNTC and finally from resistor RNTC through node 5.3 to terminal 4.2.

It is to be noted, that in Fig. 1 one end of the resistor RNTC is at the same potential as the source of the mosfet switch Q.

The DC voltage of the AC/DC converter, which is taken from the terminals 4.1 and 4.2 is consumed by the load R (which is of course not part of the embodiment).

Fig. 1 additionally shows a high frequency filter capacity C2 which may be inserted between the nodes 5.1 and 5.3 in parallel to the storage capacitor C1 and the resistor RNTC. This capacity C2 prevents the high frequency current from flowing through storage capacitor C1 and resistor RNTC. The additional capacity C2 is typically at least one order of magnitude (i.e. at least ten times) smaller than the storage capacitor C1.

The physical explanation of the lower loss achieved by the invention may be as follows: In the prior art circuit (see Fig. 2 of US 5,523,935) the instantaneous resistor current is equal to the instantaneous charging current of the storage capacitor plus the instantaneous load current. In the circuit of the present invention, the current through resistor RNTC is equal to the instantaneous charging current of capacitor C1 minus the instantaneous current through the load R. It turns out, that the rms current of the resistor RNTC is lower than the current in the current limiting resistor of the prior art.

It should be pointed out, that being in series with the link capacitor C1, the NTC resistor limits the current exactly as efficiently as it would do if it were in the position known from the cited prior art. The steady-state current is however still lower than in the prior art.

Fig. 2 shows an embodiment with an additional short-circuit element D1 parallel to the resistor RNTC. This element D1 may be a diode and is intended to eliminate the resistor RNTC from the discharging path of the storage capacitor C1 during the interruptions of the line power.

The diode D1 can be replaced either by a relay or by an n-channel mosfet, by an npn bipolar transistor or by an IGBT. The purpose of all these components is to short-circuit the inrush current limiting resistor RNTC in normal operation in order to reduce its losses to zero when it is necessary.

The remaining part of the circuit arrangement of Fig. 2 may be similar to that of Fig. 1.

An NTC resistor of the type Siemens S237/10/M has been implemented in a 600-watt telecom rectifier with a boost inductance of C = 400 µH, and a link capacitor C1 of 470 µF. A recording of the measurements of the inrush current after a short interruption of the line voltage reveals that the surge current is well within the limits which are determined according to European Tele-communications Standards Institute ("European Telecommunications Standard EE power supply interface at the input to telecommunications equipment", Part I, Final Draft 19 Oct. 1995).

## Claims

1. AC/DC voltage converter, comprising a rectifier circuit (1), a step-up converter circuit (3), a storage capacitor (C1) and a current limiting device, characterized in that the current limiting device (RNTC) is inserted in series between the lower voltage end of the storage capacitor (C1) and the lower voltage output terminal (4.2) of the step-up converter circuit (3).

2. AC/DC voltage converter according to claim 1, characterized in that the current limiting device (RNTC) is a NTC resistor.

3. AC/DC voltage converter according to claim 1 or 2, characterized in that there is an element (D1) in parallel to the current limiting device (RNTC) for short-circuiting the current limiting device (RNTC) during normal operation of the AC/DC-converter.

4. AC/DC voltage converter according to claim 1 or 2, characterized in that the element (D1) is a diode.

5. AC/DC voltage converter according to claim 1 or 2, characterized in that the element (D1) is a relay.

6. AC/DC voltage converter according to claim 1 or 2, characterized in that the element (D1) is an n-channel mosfet.

7. AC/DC voltage converter according to claim 1 or 2, characterized in that the element (D1) is an npn transistor.

8. AC/DC voltage converter according to claim 1 or 2, characterized in that the element (D1) is an IGBT element.

9. AC/DC voltage converter according to claim 1 or 2, characterized in that there is a control circuit for controlling the short-circuiting element for eliminating the effect of the current limiting device during interruptions of the line power.
